# EUROPÄISCHE PATENTSCHRIFT

(11) **EP 3 263 410 B1**
(45) Veröffentlichungstag und Bekanntmachung des Hinweises auf die Patenterteilung: **29.05.2019**
(21) Anmeldenummer: 17182606.8
(22) Anmeldetag: 22.11.2011
(51) Int. Cl.: B60S 1/38, B60S 1/40

(54) **WISCHBLATTADAPTER, INSBESONDERE FÜR EINE KRAFTFAHRZEUGWISCHVORRICHTUNG**
WIPER BLADE ADAPTER, IN PARTICULAR FOR A MOTOR VEHICLE WIPING SYSTEM
ADAPTATEUR DE BALAIS D'ESSUIE-GLACE, EN PARTICULIER POUR UN DISPOSITIF D'ESSUIE-GLACE DE VÉHICULE AUTOMOBILE

(30) Priorität: 27.12.2010 DE 102010064161
(43) Veröffentlichungstag der Anmeldung: 03.01.2018
(62) Teilanmeldung aus: 11787853.8
(73) Patentinhaber: Robert Bosch GmbH, 70442 Stuttgart (DE)
(72) Erfinder: Depondt, Helmut, 3370 Boutersem (BE)

(56) Entgegenhaltungen:
- EP-A2- 2 143 603
- DE-A1-102009 000 483
- US-A1- 2010 205 763

## Beschreibung

### Stand der Technik

Aus dem Bereich der Kraftfahrzeugwischvorrichtungen sind bereits Wischblattadapter mit einer Kopplungseinheit bekannt. Die Kopplungseinheit ist zur Kopplung mit einem Wischarmadapter vorgesehen, der an einem motorgetriebenen Wischarm angeordnet ist.

Die US 2010/205763 A1, EP 2 143 603 A2 und DE 10 2009 000483 A1 zeigen gattungsgemäße Merkmale.

### Offenbarung der Erfindung

Die Erfindung geht aus von einem Wischblattadapter, insbesondere für eine Kraftfahrzeugwischvorrichtung, mit einer Kopplungseinheit.

Es wird vorgeschlagen, dass die Kopplungseinheit zumindest ein erstes und ein zweites Kopplungselement aufweist, die zu einem Koppeln von zumindest zwei unterschiedlichen Bauarten von Wischarmadaptern vorgesehen sind, wodurch ein besonders flexibler Einsatz des Wischblattadapters erzielt werden kann. Unter einer "Kopplungseinheit" soll dabei in diesem Zusammenhang insbesondere eine Einheit verstanden werden, die dazu vorgesehen ist, ein Wischblatt mit einem Wischarm zu koppeln. Unter einem "Kopplungselement" soll dabei in diesem Zusammenhang insbesondere ein Element verstanden werden, das dazu vorgesehen ist, einen Kopplungsbereich zur Kopplung eines Wischarmadapters bereitzustellen. Unter einem "Koppeln" soll dabei in diesem Zusammenhang insbesondere ein kraft- und/oder formschlüssiges Verbinden verstanden werden. Unter "unterschiedlichen Bauarten von Wischarmadaptern" sollen in diesem Zusammenhang insbesondere verschiedene Wischarmadaptersysteme verstanden werden, die sich in ihrem Aufbau und/oder in ihrer Befestigungsfunktion unterscheiden. Bevorzugt handelt es sich um verschieden genormte Wischarmadaptersysteme. Unter einer ersten Bauart eines Wischarmadapters soll dabei in diesem Zusammenhang insbesondere ein Wischarmadapter verstanden werden, der einen Befestigungsstift und eine Auflageplatte aufweist. Unter einer weiteren möglichen Bauart eines Wischarmadapters soll dabei in diesem Zusammenhang insbesondere ein Wischarmadapter verstanden werden, der einen lang gestreckten hakenförmigen Grundkörper mit einer Biegung von 180° aufweist. Unter einer weiteren möglichen Bauart eines Wischarmadapters soll dabei in diesem Zusammenhang insbesondere ein Wischarmadapter verstanden werden, der zwei Rückanschläge und eine Befestigungsnase aufweist. Unter einer weiteren möglichen Bauart eines Wischarmadapters soll dabei in diesem Zusammenhang insbesondere ein Wischarmadapter verstanden werden, der eine Befestigungsausnehmung und einen Grundkörper mit einem s-förmigen Profil aufweist. Unter einer weiteren möglichen Bauart eines Wischarmadapters soll dabei in diesem Zusammenhang insbesondere ein Wischarmadapter verstanden werden, der eine Befestigungsausnehmung und Wandungen mit Befestigungsmitteln aufweist. Unter "vorgesehen" soll insbesondere speziell ausgelegt und/oder ausgestattet verstanden werden. Unter einem "Wischarmadapter" soll in diesem Zusammenhang insbesondere ein Adapter verstanden werden, der dazu vorgesehen ist, einen Kopplungsbereich des Wischarms für eine Kopplung mit dem Wischblattadapter bereitzustellen. Die Wischvorrichtung weist eine Rasteinheit auf, die dazu vorgesehen ist, das erste Kopplungselement mit dem zweiten Kopplungselement über eine Rastverbindung zu verbinden, kann eine Verbindung des ersten und zweiten Kopplungselements besonders schnell und zuverlässig erfolgen. Unter einer "Rasteinheit" soll in diesem Zusammenhang insbesondere eine Einheit verstanden werden, die dazu vorgesehen ist, eine Rastverbindung zwischen zwei Bauteilen herzustellen. Der Wischblattadapter weist ein Umhausungsmittel auf, das dazu vorgesehen ist, einen Wischarmadapter in seiner Bewegungsfreiheit einzuschränken, wodurch eine Einsatzmöglichkeit des Wischblattadapters vorteilhaft erweitert werden kann. Es ist zumindest ein Umhausungsmittel beweglich gelagert, sodass ein Wischarmadapter besonders einfach gesichert werden kann. Unter "gelagert" soll dabei in diesem Zusammenhang insbesondere unverlierbar verbunden verstanden werden. Es ist die Rasteinheit gezeigt, die dazu vorgesehen ist, das erste Kopplungselement mit dem zweiten Kopplungselement über eine Rastverbindung zu verbinden, das Umhausungsmittel, das dazu vorgesehen ist, einen Wischarmadapter in seiner Bewegungsfreiheit einzuschränken, wobei das Umhausungsmittel beweglich gelagert ist, wobei das erste Kopplungselement zwei Rastmittel umfasst, die ein beweglich gelagertes Umhausungsmittel sichern, wobei die Rastmittel federelastisch aus einer Ausgangsposition auslenkbar sind, und bewegen sich nach einer Auslenkung selbstständig in die Ausgangsposition zurück. Das erste und zweite Kopplungselement sind durch das Umhausungsmittel lösbar, also zerstörungsfrei trennbar, voneinander ausgebildet. Das Umhausungsmittel bildet im gezeigten montierten Zustand einen Formschluss mit dem zweiten Kopplungselement.

Ferner wird vorgeschlagen, dass das erste und zweite Kopplungselement von getrennten Bauteilen gebildet sind, wodurch der Wischblattadapter besonders einfach für eine Kopplung mit unterschiedlichen Bauarten von Wischarmadaptern angepasst werden kann. Unter "getrennten Bauteilen" sollen in diesem Zusammenhang insbesondere Bauteile verstanden werden, die gegenseitig frei von Stoffschlüssen sind.

Sind das erste und zweite Kopplungselement lösbar voneinander ausgebildet, kann der Wischblattadapter auf besonders einfache Weise für eine Kopplung mit verschiedenen Bauarten von Wischarmadaptern angepasst werden. Unter "lösbar" soll in diesem Zusammenhang insbesondere "zerstörungsfrei trennbar" verstanden werden. Besonders vorteilhaft ist der Wischblattadapter werkzeuglos lösbar und/oder befestigbar.

In einer weiteren Ausgestaltung der Erfindung wird vorgeschlagen, dass zumindest eines der Kopplungselemente zumindest ein Längsführungselement aufweist, das zur Führung eines Wischarms bei einer Montage vorgesehen ist, wodurch eine sichere Kopplung des Wischblattadapters an einem Wischarm erreicht werden kann. Unter einem "Längsführungselement" soll dabei in diesem Zusammenhang insbesondere ein Element verstanden werden, das dazu vorgesehen ist, ein Bauteil in eine Längsrichtung zu führen. Unter einer "Längsrichtung" soll dabei in diesem Zusammenhang insbesondere eine Richtung verstanden werden, die parallel zu einer Hauptlängserstreckung eines Elements verläuft. Unter einer "Hauptlängserstreckung" soll in diesem Zusammenhang insbesondere eine größtmögliche Erstreckung verstanden werden. Unter einer "Erstreckung" eines Elements soll in diesem Zusammenhang insbesondere ein maximaler Abstand zweier Punkte einer senkrechten Projektion des Elements auf eine Ebene verstanden werden.

Des Weiteren wird vorgeschlagen, dass zumindest eines der Kopplungselemente zumindest ein Rastmittel aufweist, das dazu vorgesehen ist, einen Wischarmadapter in einem montierten Zustand in seiner Bewegungsfreiheit einzuschränken, wodurch eine einfache und schnelle Kopplung mit einem Wischarmadapter erreicht werden kann. Unter einem "Rastmittel" soll in diesem Zusammenhang insbesondere ein federelastisches Mittel zur Herstellung einer Rastverbindung verstanden werden, das dazu vorgesehen ist, bei einer Montage elastisch ausgelenkt zu werden.

Umfasst der Wischblattadapter ein Umhausungsmittel, das dazu vorgesehen ist, zumindest einen Teil eines Kopplungselements nach außen hin abzuschließen, kann der Wischblattadapter und/oder ein Wischarmadapter besonders gut vor Beschädigungen und/oder Korrosion geschützt werden. Unter einem "Umhausungsmittel" soll dabei in diesem Zusammenhang insbesondere ein Mittel verstanden werden, das in zumindest einem montierten Zustand eine wesentlich sichtbare Außenfläche bildet und einen Aufnahmebereich für die Wischarmadaptereinheit bereitstellt. Unter "wesentlich sichtbar" soll in diesem Zusammenhang insbesondere auf einen Blick erkennbar verstanden werden. Bevorzugt umschließt das Umhausungsmittel zumindest teilweise andere Bauteile.

### Zeichnungen

Weitere Vorteile ergeben sich aus der folgenden Zeichnungsbeschreibung. In der Zeichnung sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Ansicht eines nicht beanspruchten Wischblattadapters,
- Fig. 2: eine perspektivische Ansicht eines ersten Kopplungselements des Wischblattadapters nach Figur 1,
- Fig. 3: eine perspektivische Ansicht eines zweiten Kopplungselements des Wischblattadapters nach Figur 1,
- Fig. 4: eine perspektivische Ansicht einer Bauart eines Wischarmadapters,
- Fig. 5a bis 5d: eine perspektivische Ansicht des Wischblattadapters nach Figur 1 und des Wischarmadapters nach Figur 4 in einem Montageablauf,
- Fig. 6: eine perspektivische Ansicht einer weiteren Bauart eines Wischarmadapters,
- Fig. 7a und 7b: eine perspektivische Ansicht des Wischblattadapters nach Figur 1 und des Wischarmadapters nach Figur 6 in einem Montageablauf,
- Fig. 8: eine perspektivische Ansicht eines erfindungsgemäßen Wischblattadapters,
- Fig. 9: eine Detailansicht eines ersten Kopplungselements des Wischblattadapters nach Figur 8,
- Fig. 10: eine Detailansicht eines zweiten Kopplungselements des Wischblattadapters nach Figur 8,
- Fig. 11: eine perspektivische Ansicht einer Adapterplatte des Wischblattadapters nach Figur 8,
- Fig. 12: eine perspektivische Ansicht eines Basisadapters des Wischblattadapters nach Figur 8,
- Fig. 13: eine perspektivische Ansicht des Basisadapters nach Figur 12 und eines Wischblatts in einem montierten Zustand,
- Fig. 14: eine perspektivische Ansicht einer weiteren Bauart eines Wischarmadapters,
- Fig. 15a und 15b: eine perspektivische Ansicht des Wischblattadapters nach Figur 8 und des Wischarmadapters nach Figur 14 in einem Montageablauf,
- Fig. 16: eine perspektivische Ansicht einer weiteren Bauart eines Wischarmadapters,
- Fig. 17a und 17b: eine perspektivische Ansicht des Wischblattadapters nach Figur 8 und des Wischarmadapters nach Figur 16 in einem Montageablauf,
- Fig. 18: eine perspektivische Ansicht einer weiteren Bauart eines Wischarmadapters und
- Fig. 19a und 19b: eine perspektivische Ansicht des Wischblattadapters nach Figur 8 und des Wischarmadapters nach Figur 18 in einem Montageablauf.

### Beschreibung der Ausführungsbeispiele

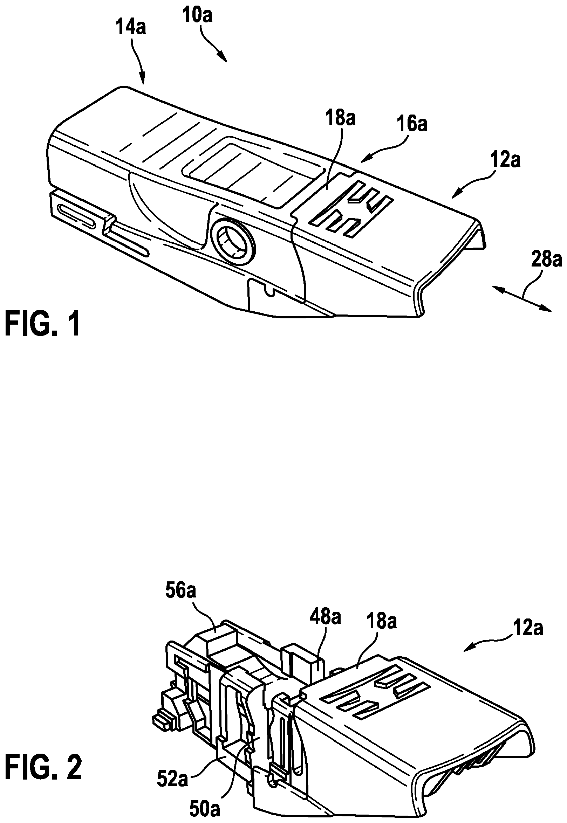

Figur 1 zeigt einen nicht beanspruchten Wischblattadapter mit einer Kopplungseinheit 10a, die ein erstes Kopplungselement 12a und ein zweites Kopplungselement 14a aufweist. Das erste Kopplungselement 12a und das zweite Kopplungselement 14a sind von getrennten Bauteilen gebildet. Die Kopplungselemente 12a, 14a sind formschlüssig verbunden.

Der Wischblattadapter beinhaltet eine Rasteinheit 16a, die dazu vorgesehen ist, das erste Kopplungselement 12a mit dem zweiten Kopplungselement 14a über eine Rastverbindung zu verbinden. Dafür umfasst das erste Kopplungselement 12a ein Rastmittel 18a, das an einem freien Ende des ersten Kopplungselements 12a angeordnet ist. Das Rastmittel 18a ist federelastisch aus einer Ausgangsposition auslenkbar und bewegt sich nach einer Auslenkung selbstständig in die Ausgangsposition zurück. Das erste und zweite Kopplungselement 12a, 14a sind durch die Rasteinheit 16a lösbar, also zerstörungsfrei trennbar, voneinander ausgebildet. Das Rastmittel 18a bildet im gezeigten montierten Zustand einen Formschluss mit dem zweiten Kopplungselement 14a.

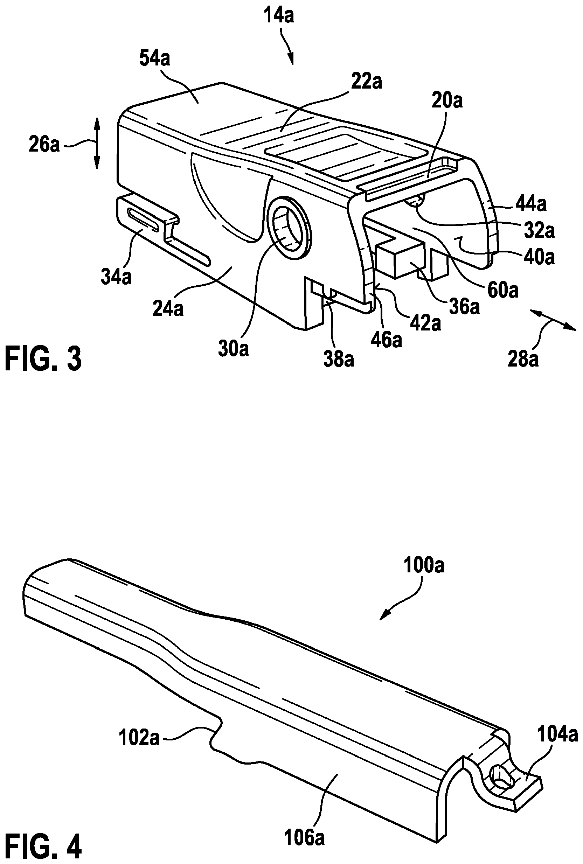

Dabei greift das Rastmittel 18a in eine Rastausnehmung 20a des zweiten Kopplungselements 14a (Figur 3). Die Rastausnehmung 20a ist in einer Abdeckung 22a des Kopplungselements 14a angeordnet. Die Abdeckung 22a ist einstückig mit einem Grundkörper 24a des zweiten Kopplungselements 14a ausgebildet und schließt dieses in eine Vertikalrichtung 26a ab. Unter "einstückig" soll insbesondere stoffschlüssig verbunden, wie beispielsweise durch einen Schweißprozess und/oder Klebeprozess usw., und besonders vorteilhaft angeformt verstanden werden, wie durch eine Herstellung aus einem Guss und/oder durch die Herstellung in einem Ein- oder Mehrkomponentenspritzgussverfahren. Die Vertikalrichtung 26a erstreckt sich senkrecht zu einer Längsrichtung 28a, die parallel zu einer Hauptlängserstreckung des zweiten Kopplungselements 14a verläuft.

Das zweite Kopplungselement 14a weist zwei kreisförmige Befestigungsausnehmungen 30a, 32a auf, die im Grundkörper 24a angeordnet sind. Die Befestigungsausnehmungen 30a, 32a sind für eine formschlüssige Verbindung mit einem Wischarmadapter vorgesehen. Ferner umfasst das zweite Kopplungselement 14a ein Rastmittel 34a, das an einem freien Ende des Grundkörpers 24a angeordnet ist. Am Grundkörper 24a sind zwei Vertikalführungselemente 36a, 38a des zweiten Kopplungselements 14a angeformt. Die Vertikalführungselemente 36a, 38a grenzen an Innenflächen 40a, 42a von Seitenwandungen 44a, 46a des zweiten Kopplungselements 14a an. Die Seitenwandungen 44a, 46a sind einstückig mit der Abdeckung 22a ausgebildet und bilden mit dieser zusammen ein Umhausungsmittel 54a. Das Umhausungsmittel 54a schließt einen Teil des zweiten Kopplungselements 14a nach außen hin ab. Das Umhausungsmittel 54a bildet dabei ein Längsführungselement 60a des zweiten Kopplungselements 14a, das zur Führung eines Wischarms bei einer Montage vorgesehen ist.

Zur Aufnahme der Vertikalführungselemente 36a, 38a weist das erste Kopplungselement 12a zwei Vertikalführungsschienen 48a, 50a auf, die von einem Grundkörper 52a gebildet sind. Zur Herstellung einer Rastverbindung zwischen dem ersten Kopplungselement 12a und dem zweiten Kopplungselement 14a wird das zweite Kopplungselement 14a in Vertikalrichtung 26a auf das erste Kopplungselement 12a gesetzt. Dabei greifen die Vertikalführungselemente 36a, 38a in die Vertikalführungsschienen 48a, 50a und vermeiden eine Bewegung des ersten Kopplungselements 12a relativ zum zweiten Kopplungselement 14a in jede von der Vertikalrichtung 26a abweichende Richtung. Durch das Aufschieben des ersten Kopplungselements 12a auf das zweite Kopplungselement 14a wird das Rastmittel 18a in Längsrichtung 28a ausgelenkt. In einer Endposition rastet das Rastmittel 18a zurück und bildet einen Formschluss mit der Rastausnehmung 20a. Eine Bewegung des ersten Kopplungselements 12a relativ zum zweiten Kopplungselement 14a in Vertikalrichtung 26a ist damit vermieden. Zum Lösen der Rastverbindung wird das Rastmittel 18a ausgelenkt und das zweite Kopplungselement 14a aus den Vertikalführungsschienen 48a, 50a herausgeschoben.

Bei einer Kopplung des Wischblattadapters mit einem Wischarmadapter muss, abhängig von einer Bauart des Wischarmadapters, das zweite Kopplungselement 14a abgenommen oder aufgesetzt werden.

Das erste Kopplungselement 12a weist ein weiteres Rastmittel 56a zur Kopplung eines Wischarmadapters einer weiteren Bauart auf. Das Rastmittel 56a ist am Grundkörper 52a angeordnet und mit diesem einstückig verbunden. Bei einer Kopplung eines entsprechenden Wischarmadapters wird das Rastmittel 56a in Vertikalrichtung 26a aus einer Ausgangsposition ausgelenkt und bewegt sich schließlich wieder in diese zurück.

Figur 4 zeigt eine perspektivische Ansicht eines Wischarmadapters 100a, der für eine Kopplung mit dem Wischblattadapter vorgesehen ist. Der Wischarmadapter 100a weist zwei Rückanschläge 102a und eine Befestigungsnase 104a auf. Die Rückanschläge 102a schließen mit Seitenwänden 106a des Wischarmadapters 100a bündig ab. Die Befestigungsnase 104a ist an einem freien Ende des Wischarmadapters 100a als Fortsatz ausgebildet.

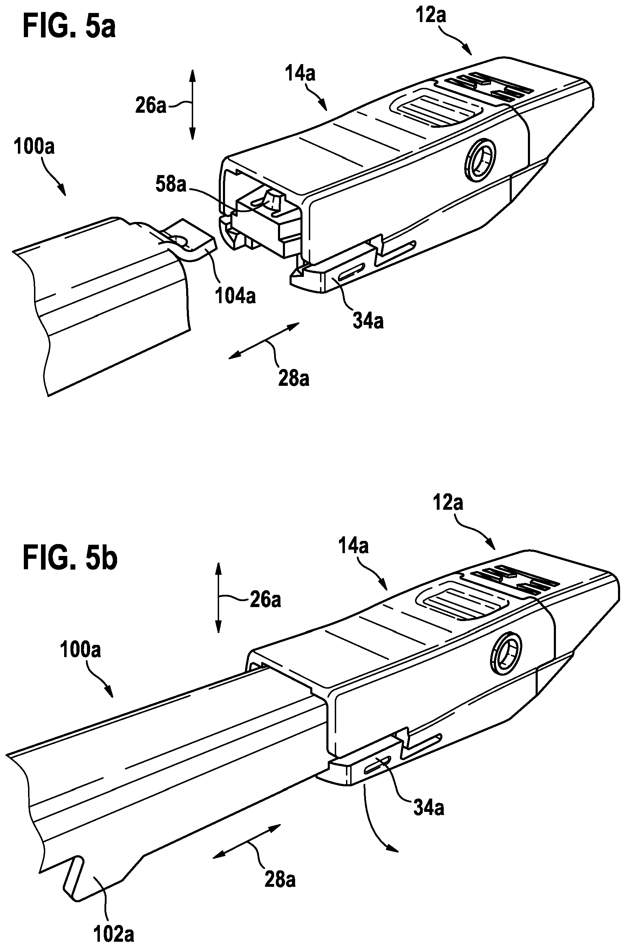

In Figur 5a ist eine perspektivische Ansicht eines ersten Montageschritts einer Kopplung des Wischarmadapters 100a mit dem Wischblattadapter gezeigt. In Längsrichtung 28a betrachtet, ist der Wischarmadapter 100a vor dem Wischblattadapter angeordnet. Die Befestigungsnase 104a wird über ein Rastmittel 58a des ersten Kopplungselements 12a geschoben. Das Rastmittel 58a ist widerhakenförmig ausgebildet und wird von der Befestigungsnase 104a in Vertikalrichtung 26a ausgelenkt. Dabei drückt das Rastmittel 58a des ersten Kopplungselements 12a auf das Rastmittel 34a des zweiten Kopplungselements 14a und lenkt dieses ebenfalls in Vertikalrichtung 26a aus.

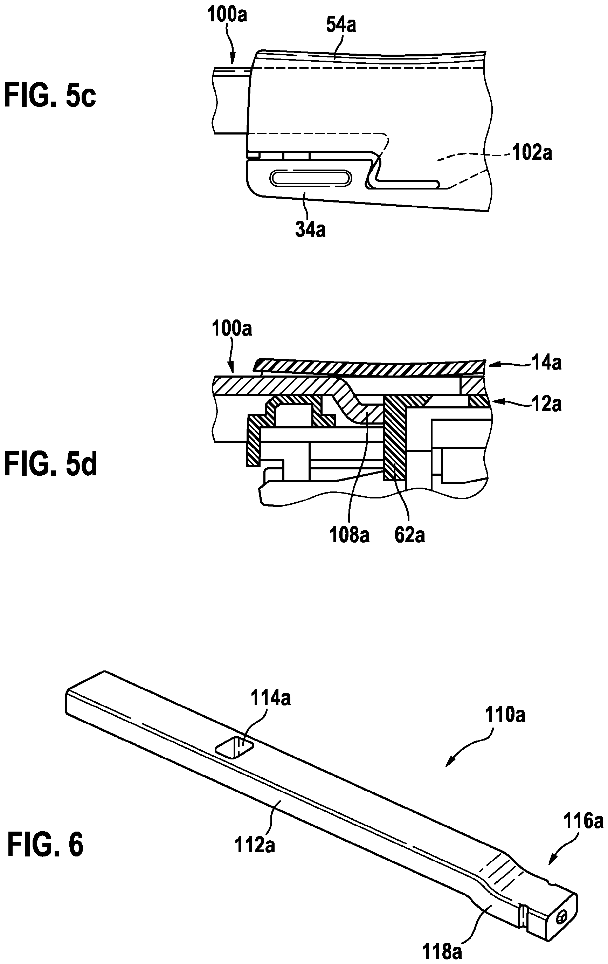

Der Wischarmadapter 100a wird nun in das Umhausungsmittel 54a geschoben und vom Längsführungselement 60a des zweiten Kopplungselements 14a geführt (Figur 5b). Zuletzt wird das Rastmittel 34a des zweiten Kopplungselements 14a von den Rückanschlägen 102a in Vertikalrichtung 26a aus seiner Ausgangsposition ausgelenkt. Ist der Wischarmadapter 100a komplett in das Umhausungsmittel 54a eingeschoben, federt das Rastmittel 34a in seine Ausgangsposition zurück und vermeidet ein Zurückschieben des Wischarmadapters 100a aus dem montierten Zustand (Figur 5c). Dadurch ist der Wischarmadapter 100a im montierten Zustand in seiner Bewegungsfreiheit eingeschränkt. In einer Variante des Wischarmadapters 100a weist dieser eine zweite Befestigungsnase 108a auf, die in einem montierten Zustand an einen Anschlag 62a des ersten Kopplungselements 12a angrenzt (Figur 5d).

Figur 6 zeigt einen Wischarmadapter 110a, der sich in seiner Bauart vom Wischarmadapter 100a aus Figur 4 unterscheidet. Der Wischarmadapter 110a weist einen Grundkörper 112a mit einer Befestigungsausnehmung 114a auf. In einem Endbereich 116a weist der Wischarmadapter 100a ein s-förmiges Profil 118a auf.

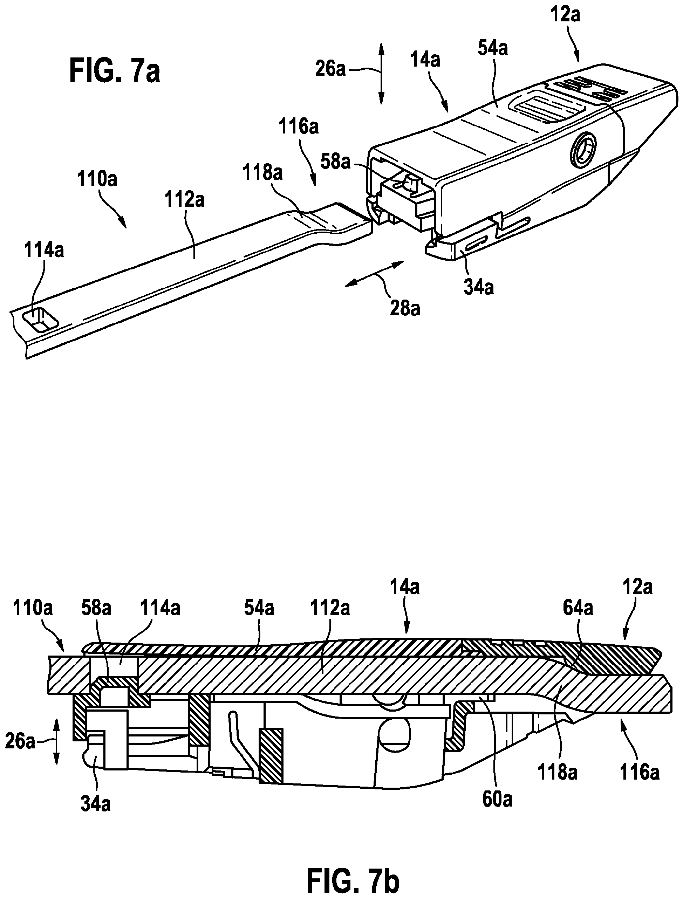

In Figur 7a ist eine perspektivische Ansicht eines ersten Montageschritts einer Kopplung des Wischarmadapters 110a mit dem Wischblattadapter gezeigt. In Längsrichtung 28a betrachtet, ist der Wischarmadapter 110a vor dem Wischblattadapter angeordnet. Der Grundkörper 112a wird über das Rastmittel 58a des ersten Kopplungselements 12a geschoben. Das Rastmittel 58a ist widerhakenförmig ausgebildet und wird vom Grundkörper 112a in Vertikalrichtung 26a ausgelenkt. Dabei drückt das Rastmittel 58a des ersten Kopplungselements 12a auf das Rastmittel 34a des zweiten Kopplungselements 14a und lenkt dieses ebenfalls in Vertikalrichtung 26a aus.

Der Wischarmadapter 110a wird nun in das Umhausungsmittel 54a geschoben und vom Längsführungselement 60a des zweiten Kopplungselements 14a geführt (Figur 7b). Das Rastmittel 34a des zweiten Kopplungselements 14a wird vom Grundkörper 112a in Vertikalrichtung 26a aus seiner Ausgangsposition ausgelenkt. Ist der Wischarmadapter 110a komplett in das Umhausungsmittel 54a eingeschoben, federt das Rastmittel 34a in seine Ausgangsposition zurück, greift formschlüssig in die Befestigungsausnehmung 114a ein und vermeidet ein Zurückschieben des Wischarmadapters 110a aus dem montierten Zustand. Das s-förmige Profil 118a liegt an einem Anschlag 64a des ersten Kopplungselements 12a an.

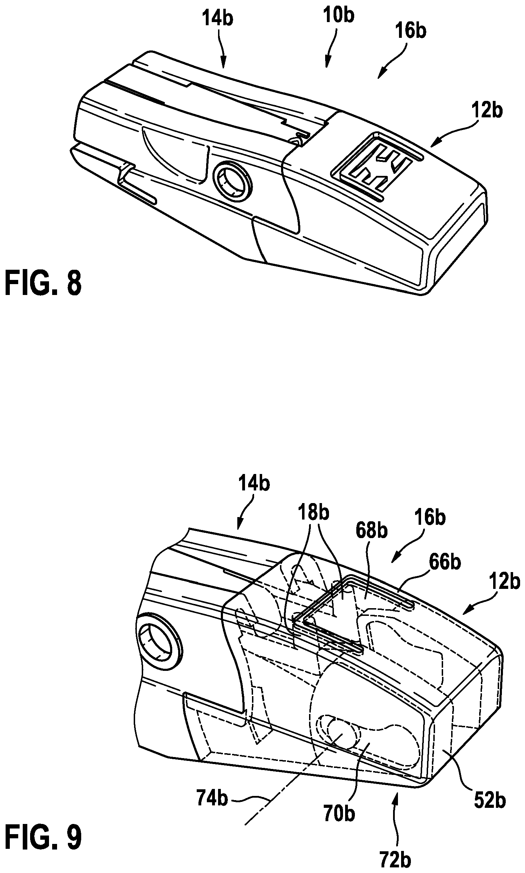

In den Figuren 8 bis 19 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des ersten Ausführungsbeispiels verwiesen werden kann. Zur Unterscheidung der Ausführungsbeispiele ist der Buchstabe a in den Bezugszeichen des Ausführungsbeispiels in den Figuren 1 bis 7 durch den Buchstaben b in den Bezugszeichen des Ausführungsbeispiels in den Figuren 8 bis 19 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des ersten Ausführungsbeispiels verwiesen werden.

Figur 8 zeigt einen erfindungsgemäßen Wischblattadapters mit einer Kopplungseinheit 10b, die ein erstes Kopplungselement 12b und ein zweites Kopplungselement 14b aufweist. Das erste Kopplungselement 12b und das zweite Kopplungselement 14b sind von getrennten Bauteilen gebildet. Die Kopplungselemente 12b, 14b sind formschlüssig verbunden.

Der Wischblattadapter beinhaltet eine Rasteinheit 16b, die dazu vorgesehen ist, das erste Kopplungselement 12b mit dem zweiten Kopplungselement 14b über eine Rastverbindung zu verbinden (Figur 9). Dafür umfasst das erste Kopplungselement 12b zwei Rastmittel 18b, die ein beweglich gelagertes Umhausungsmittel 66b sichern. Die Rastmittel 18b sind federelastisch aus einer Ausgangsposition auslenkbar und bewegen sich nach einer Auslenkung selbstständig in die Ausgangsposition zurück. Das erste und zweite Kopplungselement sind durch das Umhausungsmittel 66b lösbar, also zerstörungsfrei trennbar, voneinander ausgebildet. Das Umhausungsmittel 66b bildet im gezeigten montierten Zustand einen Formschluss mit dem zweiten Kopplungselement 14b.

Zum Lösen der beiden Kopplungselemente 12b, 14b wird ein Betätigungsmittel 68b des Umhausungsmittels 66b ausgelenkt, das federelastisch ausgeführt ist. Das Betätigungsmittel 68b lenkt die Rastmittel 18b aus und löst damit die Rastverbindung mit dem Umhausungsmittel 66b. Das Umhausungsmittel 66b wird nun entlang einer Führungsschiene 70b geführt, die in einem Endbereich 72b verbreitert ist. Liegt das Umhausungsmittel 66b im Endbereich 72b der Führungsschiene 70b an, wird es um eine Schwenkachse 74b geschwenkt. Das Umhausungsmittel 66b lässt sich relativ zu einem Grundkörper 52b des zweiten Kopplungselements 14b translatorisch und rotatorisch bewegen. Dabei umschließt das Umhausungsmittel 66b teilweise das zweite Kopplungselement 14b. Eine Abdeckung 22b des zweiten Kopplungselements 14b ist einstückig mit einem Grundkörper 24b des zweiten Kopplungselements 14b ausgebildet und schließt dieses in eine Vertikalrichtung 26b ab. Die Vertikalrichtung 26b erstreckt sich senkrecht zu einer Längsrichtung 28b, die parallel zu einer Hauptlängserstreckung des zweiten Kopplungselements 14b verläuft.

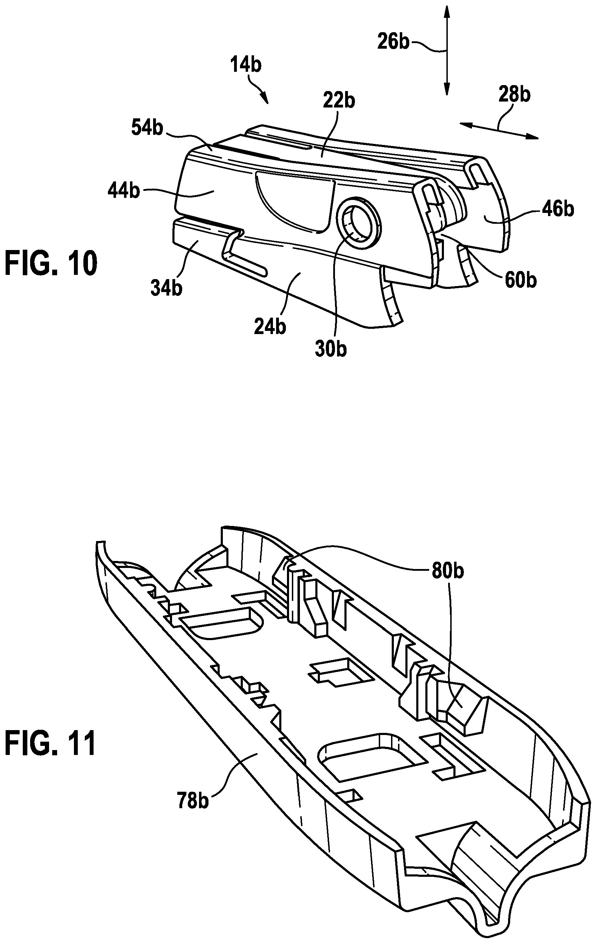

Das zweite Kopplungselement 14b weist zwei kreisförmige Befestigungsausnehmungen 30b auf, die im Grundkörper 24b angeordnet sind (Figur 10). Die Befestigungsausnehmungen 30b sind für eine formschlüssige Verbindung mit einem Wischarmadapter vorgesehen.

Ferner umfasst das zweite Kopplungselement 14b ein Rastmittel 34b, das an einem freien Ende des Grundkörpers 24b angeordnet ist. Ferner weist das zweite Kopplungselement 14b Seitenwandungen 44b, 46b auf. Die Seitenwandungen 44b, 46b sind einstückig mit der Abdeckung 22b ausgebildet und bilden mit dieser zusammen ein Umhausungsmittel 54b. Das Umhausungsmittel 54b schließt einen Teil des zweiten Kopplungselements 14b nach außen hin ab. Das Umhausungsmittel 54b bildet dabei ein Längsführungselement 60b des zweiten Kopplungselements 14b, das zur Führung eines Wischarms bei einer Montage vorgesehen ist.

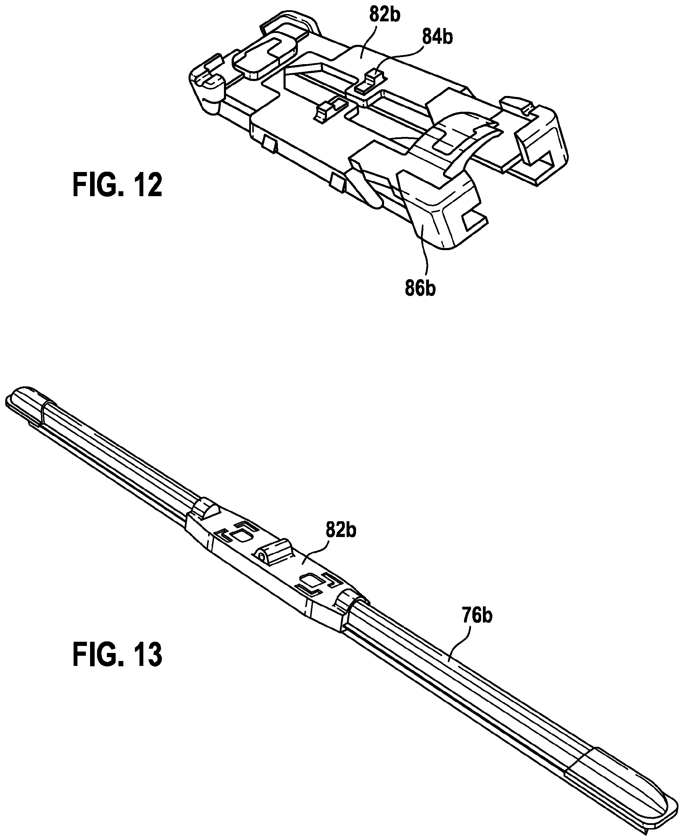

Das erste und zweite Kopplungselement 12b, 14b sind über einen Stift (nicht dargestellt) auf einer Adapterplatte 78b befestigbar. Die Adapterplatte 78b weist an einer Unterseite Rastmittel 80b auf (Figur 11), die in einem montierten Zustand einen Formschluss mit einem Basisadapter 82b bilden. Der Basisadapter 82b weist Befestigungsmittel 84b auf, die in einem montierten Zustand einen Formschluss mit der Adapterplatte 78b bilden. Die Rastmittel 80b greifen dabei in Rastausnehmungen 86b des Basisadapters 82b ein (Figur 12). Der Basisadapter 82b ist an einem Wischblatt 76b über ein weiteres Bauteil (nicht dargestellt) befestigt (Figur 13).

Bei einer Kopplung des Wischblattadapters mit einem Wischarmadapter muss, abhängig von einer Bauart des Wischarmadapters, das zweite Kopplungselement 14b abgenommen oder aufgesetzt werden. Der Wischblattadapter kann mit den in den Figuren 4 und 6 gezeigten Wischarmadaptern auf gleiche Weise gekoppelt werden wie der Wischblattadapter des ersten Ausführungsbeispiels.

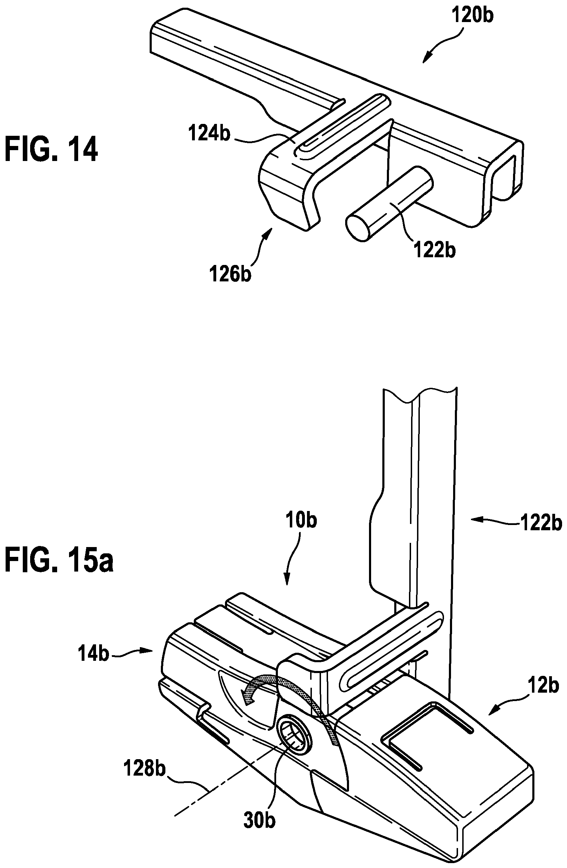

In Figur 14 ist eine perspektivische Ansicht eines Wischarmadapters 120b weiterer Bauart gezeigt. Der Wischarmadapter 120b weist einen Befestigungsstift 122b auf. Ferner umfasst der Wischarmadapter 120b eine Auflageplatte 124b, die sich ihrer Haupterstreckung zunächst parallel zum Befestigungsstift 122b erstreckt. Die Auflageplatte 124b knickt in einem Endbereich 126b um 90° ab.

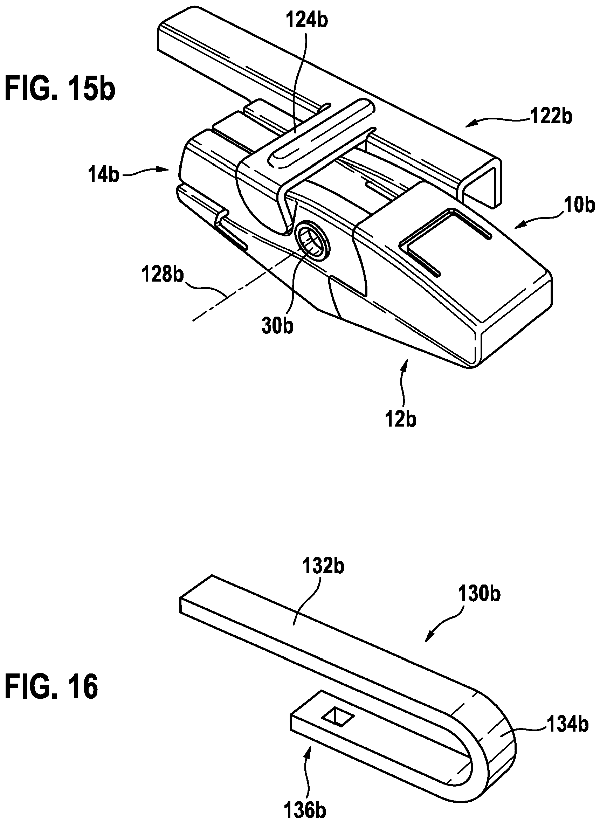

In Figur 15a ist eine perspektivische Ansicht eines ersten Montageschritts einer Kopplung des Wischarmadapters 120b mit dem Wischblattadapter gezeigt. Der Befestigungsstift 122b ist in die Befestigungsausnehmungen 30b geschoben und bildet mit diesen einen Formschluss. Durch eine Drehung des Wischarmadapters 120b relativ zur Kopplungseinheit 10b um eine Schwenkachse 128b greift ein Teil der Auflageplatte 124b hinter das zweite Kopplungselement 14b und vermeidet somit ein Zurückschieben des Wischarmadapters 120b (Figur 15b).

Figur 16 zeigt einen Wischarmadapter 130b, der einen lang gestreckten Grundkörper 132b umfasst. Der Grundkörper 132b weist eine Biegung 134b auf, die 180° beträgt.

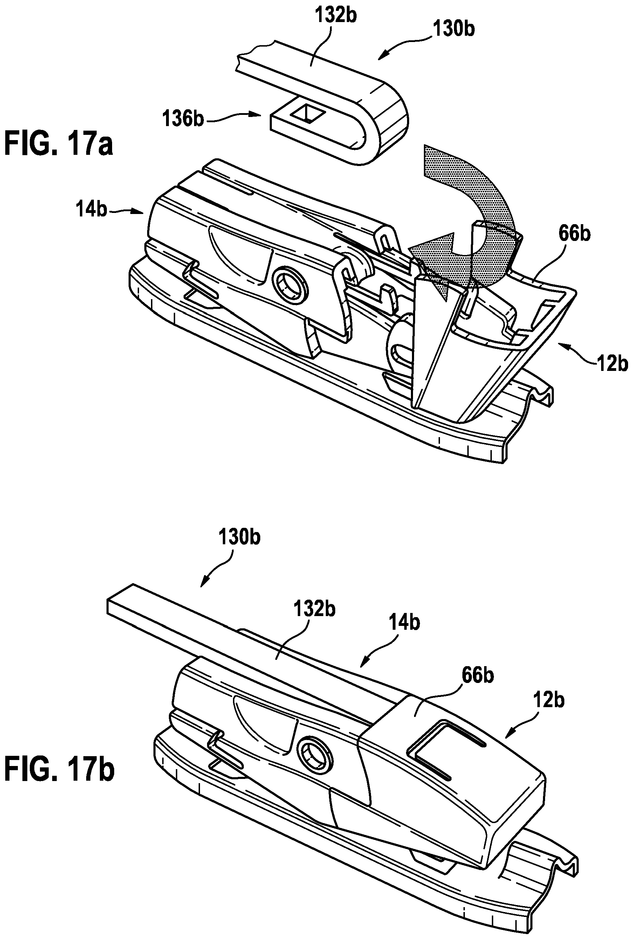

In Figur 17a ist eine perspektivische Ansicht eines ersten Montageschritts einer Kopplung des Wischarmadapters 130b mit dem Wischblattadapter gezeigt. Das Umhausungsmittel 66b ist in einem geöffneten Zustand. Ein Endbereich 136b des Wischarmadapters 130b wird nun in das Längsführungselement 60b des zweiten Kopplungselements 14b eingeschoben. Durch ein Zurückführen und Verrasten des Umhausungsmittels 66b ist der Wischarmadapter 130b sicher mit dem Wischblattadapter gekoppelt.

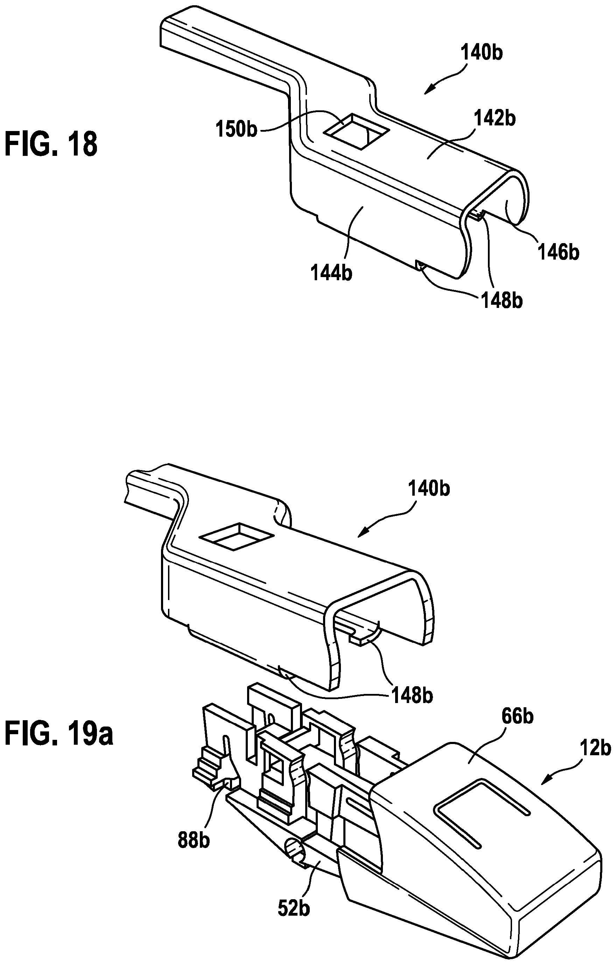

Ein Wischarmadapter 140b weiterer Bauart ist in Figur 18 perspektivisch dargestellt. Der Wischarmadapter 140b weist eine Grundwandung 142b auf, an welcher zwei Seitenwandungen 144b, 146b angeordnet sind. Die Seitenwandungen 144b, 146b schließen jeweils mit der Grundwandung 142b einen Winkel von 90° ein. An einem unteren Ende der jeweiligen Seitenwandung 144b, 146b sind Befestigungsmittel 148b angeordnet, die wiederum einen Winkel von 90° zu den Seitenwandungen 144b, 146b einschließen. In der Grundwandung 142b des Wischarmadapters ist zusätzlich eine Befestigungsausnehmung 150b angeordnet.

Das zweite Kopplungselement 14b wird zur Montage des Wischarmadapters 140b entfernt (Figur 19a). Das Umhausungsmittel 66b wird relativ zum Grundkörper 52b translatorisch verschoben. Bei einem Aufsetzen des Wischarmadapters 140b auf das erste Kopplungselement 12b wird ein am Grundkörper 52b angeordnetes Rastmittel 88b aus einer Ausgangsposition ausgelenkt.

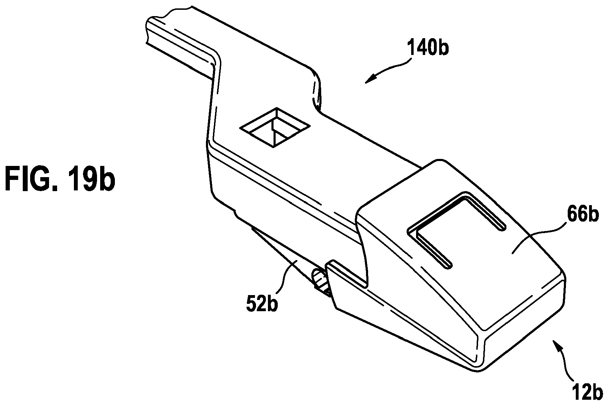

Ist der Wischarmadapter 140b vollständig auf das erste Kopplungselement 12b aufgesetzt, wird das Rastmittel 88b zurück in seine Ausgangsposition bewegt und bildet dann mit dem Wischarmadapter 140b einen Formschluss, der eine Bewegung des Wischarmadapters 140b zurück aus dem montierten Zustand vermeidet (Figur 19b).

## Patentansprüche

1. Wischblattadapter, insbesondere für eine Kraftfahrzeugwischvorrichtung, mit einer Kopplungseinheit (10b), wobei die Kopplungseinheit (10b) zumindest ein erstes und ein zweites Kopplungselement (12b, 14b) aufweist, die zu einem Koppeln von zumindest zwei unterschiedlichen Bauarten von Wischarmadaptern (130b, 140b) vorgesehen sind, wobei die Kopplungseinheit (10b) eine Rasteinheit (16b) aufweist, die dazu vorgesehen ist, das erste Kopplungselement (12b) mit dem zweiten Kopplungselement (14b) über eine Rastverbindung zu verbinden, ein Umhausungsmittel (66b) aufweist, das dazu vorgesehen ist, einen Wischarmadapter (120b, 130b, 140b) in seiner Bewegungsfreiheit einzuschränken, wobei das Umhausungsmittel (66b) beweglich gelagert ist, wobei das erste Kopplungselement (12b) zwei Rastmittel (18b) umfasst, die das beweglich gelagertes Umhausungsmittel (66b) sichern, wobei die Rastmittel (18b) federelastisch aus einer Ausgangsposition auslenkbar sind, und sich nach einer Auslenkung selbstständig in die Ausgangsposition zurückbewegen, **dadurch gekennzeichnet dass** das erste und zweite Kopplungselement durch das Umhausungsmittel lösbar voneinander ausgebildet sind, wobei das Umhausungsmittel im montierten Zustand einen Formschluss mit dem zweiten Kopplungselement (14b) bildet.

2. Wischblattadapter nach Anspruch 1, **dadurch gekennzeichnet, dass** das erste und zweite Kopplungselement (12b, 14b) von getrennten Bauteilen gebildet sind.

3. Wischblattadapter nach Anspruch 2, **dadurch gekennzeichnet, dass** das erste und zweite Kopplungselement (12b, 14b) lösbar voneinander ausgebildet sind.

4. Wischblattadapter nach einem der vorhergehenden Ansprüche, **dadurch gekennzeichnet, dass** zumindest eines der Kopplungselemente (12b, 14b) zumindest ein Längsführungselement (60b) aufweist, das zur Führung eines Wischarmadapters (130b) bei einer Montage vorgesehen ist.

5. Wischblattadapter nach einem der vorhergehenden Ansprüche, **dadurch gekennzeichnet, dass** zumindest eines der Kopplungselemente (12b) zumindest ein Rastmittel (34b) aufweist, das dazu vorgesehen ist, einen Wischarmadapter (110a) in einem montierten Zustand in seiner Bewegungsfreiheit einzuschränken.

6. Wischblattadapter nach einem der vorhergehenden Ansprüche, **gekennzeichnet durch** ein Umhausungsmittel (54b), das dazu vorgesehen ist, zumindest einen Teil eines Kopplungselements (14b) nach außen hin abzuschließen.

7. System mit einem Wischblattadapter nach einem der vorhergehenden Ansprüche und zumindest zwei Wischarmadaptern (130b, 140b).

## Claims

1. Wiper blade adapter, in particular for a motor vehicle wiper device, comprising a coupling unit (10b), wherein the coupling unit (10b) has at least one first and one second coupling element (12b, 14b), which are provided for coupling at least two different types of wiper arm adapters (130b, 140b), wherein the coupling unit (10b) has a latching unit (16b) which is provided to connect the first coupling element (12b) to the second coupling element (14b) via a latching connection, enclosure means (66b) which is provided to limit a wiper arm adapter (120b, 130b, 140b) in its freedom of movement, wherein the enclosure means (66b) is mounted movably, wherein the first coupling element (12b) comprises two latching means (18b) which secure the movably mounted enclosure means (66b), wherein the latching means (18b) are deflectable out of a starting position in a spring-elastic manner and, after a deflection, automatically move back into the starting position, **characterized in that** the first and second coupling element are formed so as to be detachable from each other by means of the enclosure means, wherein the enclosure means in the fitted state forms a form fit with the second coupling element (14b).

2. Wiper blade adapter according to Claim 1, **characterized in that** the first and second coupling elements (12b, 14b) are formed by separate components.

3. Wiper blade adapter according to Claim 2, **characterized in that** the first and second coupling elements (12b, 14b) are formed so as to be detachable from each other.

4. Wiper blade adapter according to one of the preceding claims, **characterized in that** at least one of the coupling elements (12b, 14b) has at least one longitudinal guide element (60b) which is provided for guiding a wiper arm adapter (130b) during installation.

5. Wiper blade adapter according to one of the preceding claims, **characterized in that** at least one of the coupling elements (12b) has at least one latching means (34b) which is provided to limit the freedom of movement of a wiper arm adapter (110a) in a fitted state.

6. Wiper blade adapter according to one of the preceding claims, **characterized by** an enclosure means (54b) which is provided to close off at least part of a coupling element (14b) to the outside.

7. System comprising a wiper blade adapter according to one of the preceding claims and at least two wiper arm adapters (130b, 140b).

## Revendications

1. Adaptateur pour balai d'essuie-glace, en particulier pour ensemble d'essuie-glace de véhicule automobile, l'adaptateur présentant une unité d'accouplement (10b), l'unité d'accouplement (10b) présentant au moins un premier et un deuxième élément d'accouplement (12b, 14b) prévus pour accoupler au moins deux modèles différents (130b, 140b) d'adaptateur de bras d'essuie-glace, l'unité d'accouplement (10b) présentant une unité d'encliquetage (16b) prévue pour relier le premier élément d'accouplement (12b) au deuxième élément d'accouplement (14b) par une liaison encliquetée, un moyen d'enveloppement (66b) qui est prévu pour limiter la liberté de déplacement d'un adaptateur de bras d'essuie-glace (120b, 130b, 140b), le moyen d'enveloppement (66b) étant supporté de manière déplaçable, le premier élément d'accouplement (12b) comprenant deux moyens d'encliquetage (18b) qui fixent le moyen d'enveloppement (66b) supporté de manière déplaçable, les moyens d'encliquetage (18b) pouvant être déviés de manière élastique par ressort hors d'une position de départ et revenant dans la position de départ automatiquement après une déviation, **caractérisé en ce que** le premier et le deuxième élément d'accouplement sont réalisés de manière à pouvoir être détachés l'un de l'autre par le moyen d'enveloppement, le moyen d'enveloppement, dans l'état monté, formant un engagement par correspondance de formes avec le deuxième élément d'accouplement (14b).

2. Adaptateur pour balai d'essuie-glace selon la revendication 1, **caractérisé en ce que** le premier et le deuxième élément d'accouplement (12b, 14b) sont formés de composants distincts.

3. Adaptateur pour balai d'essuie-glace selon la revendication 2, **caractérisé en ce que** le premier et le deuxième élément d'accouplement (12b, 14b) sont réalisés de manière à pouvoir être détachés l'un de l'autre.

4. Adaptateur pour balai d'essuie-glace selon l'une des revendications précédentes, **caractérisé en ce qu'**au moins l'un des éléments d'accouplement (12b, 14b) présente au moins un élément (60b) de guidage longitudinal prévu pour guider un adaptateur (130b) de bras d'essuie-glace lors de son montage.

5. Adaptateur pour balai d'essuie-glace selon l'une des revendications précédentes, **caractérisé en ce qu'**au moins un des éléments d'accouplement (12b) présente au moins un moyen d'encliquetage (34b) prévu pour limiter la liberté de déplacement d'un adaptateur (110a) de bras d'essuie-glace lorsqu'il est monté.

6. Adaptateur pour balai d'essuie-glace selon l'une des revendications précédentes, **caractérisé par** un moyen d'enveloppement (54b) prévu pour fermer vis-à-vis de l'extérieur au moins une partie d'un élément d'accouplement (14b).

7. Système présentant un adaptateur de balai d'essuie-glace selon l'une des revendications précédentes et au moins deux adaptateurs (130b, 140b) de bras d'essuie-glace.
